# EUROPEAN PATENT SPECIFICATION

(11) **EP 4 513 649 B1**
(45) Date of publication and mention of the grant of the patent: **28.10.2026**
(21) Application number: 23900104.3
(22) Date of filing: 11.12.2023
(51) Int. Cl.: H01M 50/291, H01M 10/052, H01M 50/109, H01M 50/171

(54) **BATTERY AND ELECTRONIC DEVICE**
BATTERIE UND ELEKTRONISCHE VORRICHTUNG
BATTERIE ET DISPOSITIF ÉLECTRONIQUE

(30) Priority: 09.12.2022 CN 202223306513 U
(43) Date of publication of application: 26.02.2025
(60) Divisional application: 26206167.4
(73) Proprietor: Zhuhai CosMX Battery Co., Ltd., Zhuhai, Guangdong 519180 (CN)
(72) Inventor: XI, Yang, Zhuhai, Guangdong 519180 (CN); ZHOU, Jinyong, Zhuhai, Guangdong 519180 (CN); XIE, Jichun, Zhuhai, Guangdong 519180 (CN); WEI, Zhida, Zhuhai, Guangdong 519180 (CN)
(74) Representative: Vossius & Partner Patentanwälte Rechtsanwälte mbB
(86) International application number: PCT/CN2023/137829
(87) International publication number: WO 2024/120536

(56) References cited:
- WO-A1-2020/156061
- CN-A- 112 366 396
- CN-A- 112 563 556
- CN-A- 115 101 866
- CN-U- 212 062 599
- CN-U- 213 401 327
- CN-U- 214 099 726
- CN-U- 215 070 167
- CN-U- 217 334 339
- CN-U- 217 507 591
- CN-U- 218 827 670

## Description

This disclosure claims priority to the Chinese patent disclosure No. 202223306513.4, entitled "Battery and Electronic Device", and filed with the China National Intellectual Property Administration on December 9, 2022**.**

### TECHNICAL FIELD

Embodiments of the present application relate to the technical field of structure of batteries, and in particular to a battery and an electronic device.

### BACKGROUND

Batteries (such as lithium-ion batteries) have been widely used as power supply devices. A button battery is a small-sized battery, an outer peripheral surface of which is covered with a layer of circumferential glue, to give good protection for the button battery. The button battery is accommodated in a battery compartment.

In the related art, the button battery is fixed in the battery compartment by means of gluing. However, since the entire outer peripheral surface of the button battery is covered with the circumferential glue, all the glue after gluing will stick to the circumferential glue, resulting in the body of the button battery not being fixed by glue, and the button battery being prone to shaking when in use and thus having low safety.

CN217507591U discloses a battery, which includes a casing and a cell assembly disposed inside the casing. The cell assembly comprises a cell main body and a tab; the tab includes a first segment connected to the cell main body and a second segment electrically connected to the end face of the casing. The included angle between the first segment and the second segment is 90°. The tab between the first segment and the second segment is bent toward the cell main body at least once.

CN214099726U discloses a button cell, which includes a soft-packaged cell. The soft-packaged cell comprises a core, a first half-shell, and a second half-shell. Both the first half-shell and the second half-shell are of a soft packaging film structure, and the soft packaging film structure includes a PP layer, a plastic layer, and a metal layer sandwiched between the PP layer and the plastic layer.

### SUMMARY

Embodiments of the present application provide a battery and an electronic device to solve the problems of poor fixing effect and low safety of the button battery. The present invention is set out in the appended set of claims.

On the one hand, an embodiment of the present application provides a battery, including a battery body and a protective glue layer. The protective glue layer includes a first adhesive segment and a second adhesive segment that are circumferentially coated on an outer peripheral wall of the battery body, and the first adhesive segment and the second adhesive segment have a connecting notch formed therebetween in a circumferential direction of the outer peripheral wall. Both a width of the first adhesive segment and a width of the second adhesive segment are less than a thickness of the battery body in a first direction, to form an exposed area, and part of the outer peripheral wall of the battery body is exposed outside the protective glue layer through the connecting notch and the exposed area.

In some embodiments that may include the above embodiment, the protective glue layer further includes a third adhesive segment, the third adhesive segment is disposed between the first adhesive segment and the second adhesive segment, and the third adhesive segment is connected to both the first adhesive segment and the second adhesive segment. In the first direction, a width of the third adhesive segment is smaller than the thickness of the battery body, and the width of the third adhesive segment is greater than the width of the first adhesive segment and the width of the second adhesive segment.

In some embodiments that may include the above embodiment, the battery body includes a shell, a battery cell, a first shell cover, a second shell cover and a first insulating sheet. The shell includes an installation cavity with an opening, and the battery cell is disposed in the installation cavity through the opening. The first shell cover, the first insulating sheet and the second shell cover are stacked along the first direction, the first insulating sheet is disposed between the first shell cover and the second shell cover, and the second shell cover is disposed in the installation cavity through the opening. The first shell cover has a first through hole, the first insulating sheet has a second through hole, a central axis of the first through hole coincides with a central axis of the second through hole, the second shell cover has a connecting terminal extending toward the first shell cover, the connecting terminal matches both the first through hole and the second through hole, and the connecting terminal is exposed on a surface of the first shell cover through the first through hole and the second through hole. The battery cell includes a first tab and a second tab, the first tab is electrically connected to an inner wall surface of the shell, and the second tab is electrically connected to the second shell cover.

In some embodiments that may include the above embodiment, the first shell cover includes a front connecting surface and a reverse connecting surface opposite to each other along the first direction, the reverse connecting surface is connected to the first insulating sheet, and an edge of the reverse connecting surface is provided with an annular connecting groove, and the annular connecting groove matches the opening.

In some embodiments that may include the above embodiment, the battery body further includes a first adapting member, a second adapting member and a second insulating sheet. The front connecting surface is provided with an adhesive sinking platform matching the second insulating sheet. A first connecting section of the first adapting member is electrically connected to the front connecting surface of the first shell cover, and a first adaptor of the first adapting member is correspondingly placed on the second insulating sheet. A second connecting section of the second adapting member is electrically connected to the connecting terminal, and a second adaptor of the second adapting member is correspondingly placed on the second insulating sheet.

In some embodiments that may include the above embodiment, the first adapting member further includes a positioning member, the first connecting section includes a first end and a second end, the first adaptor is connected to the first end, the positioning member is connected to the second end, the positioning member extends out of the battery body in a second direction, and the positioning member is disposed on a center line between the first adaptor and the second adaptor. The second direction is perpendicular to the first direction.

In some embodiments which may include the above embodiment, the positioning member is parallel to the first connecting section.

In some embodiments that may include the above embodiment, the positioning member is perpendicular to the first connecting section, the positioning member extends along the first direction, and a gap is present between the positioning member and the outer peripheral wall of the battery body.

In some embodiments that may include the above embodiment, the positioning member includes a bent end, and the bent end is perpendicular to the outer peripheral wall of the battery body and extends away from the outer peripheral wall of the battery body.

In some embodiments that may include the above embodiment, a center line of the third adhesive segment is aligned with a center line of a gap between the first adapting member and the second adapting member.

In some embodiments that may include the above embodiment, the connecting notch is symmetrically provided with the first adapting member and the second adapting member along a center line of the battery body.

On the other hand, an embodiment of the present application also provides an electronic device, which includes the battery described above and a battery compartment. The battery is disposed inside the battery compartment, part of the outer peripheral wall of the battery body is exposed outside the protective glue layer through the exposed area, and an adhesive glue layer is disposed between the part of the outer peripheral wall and an inner wall of the battery compartment. Another part of the outer peripheral wall of the battery body is exposed outside the protective glue layer through the connecting notch, and the electronic device further includes wirings located in the connecting notch.

In the battery and the electronic device provided in the embodiments of the present application, the protective glue layer which does not completely cover the battery body is disposed on the outer peripheral wall of the battery body, so that the part of the outer peripheral wall of the battery body is exposed to the outside, thereby ensuring the installation and fixation of the battery after installed in the battery compartment, avoiding the problem of battery shaking caused by the glue only fixing the protective glue layer but not fixing the battery body, and meanwhile effectively solving the problem of interference between another connecting wire of the device or a connecting wire of the battery and the protective glue layer.

### BRIEF DESCRIPTION OF DRAWINGS

The accompanying drawings, which are incorporated in this specification and constitute a part of this specification, illustrate the embodiments complying with the present application and serve to explain the principles of the present application together with this specification.
FIG. 1 is a schematic diagram showing an exploded structure of a battery according to an embodiment of the present application.
FIG. 2 is a first structural schematic diagram showing the battery according to an embodiment of the present application.
FIG. 3 is a structural schematic diagram showing a circumferential glue of the battery according to an embodiment of the present application.
FIG. 4 is a first structural schematic diagram showing a battery cell of the battery according to an embodiment of the present application.
FIG. 5 is a second structural schematic diagram showing the battery cell of the battery according to an embodiment of the present application.
FIG. 6 is a third structural schematic diagram showing the battery cell of the battery according to an embodiment of the present application.
FIG. 7 is a first structural schematic diagram showing a first shell cover of the battery according to an embodiment of the present application.
FIG. 8 is a second structural schematic diagram showing the first shell cover of the battery according to an embodiment of the present application.
FIG. 9 is a structural schematic diagram showing a second shell cover of the battery according to an embodiment of the present application.
FIG. 10 is a structural schematic diagram showing a first adapting member of the battery according to an embodiment of the present application.
FIG. 11 is a structural schematic diagram showing a second adapting member of the battery according to an embodiment of the present application.
FIG. 12 is a second structural schematic diagram showing the battery according to an embodiment of the present application.
FIG. 13 is a cross-sectional view along A-A direction in FIG. 12.
FIG. 14 is an enlarged view of portion B in FIG. 13.
FIG. 15 is a structural schematic diagram showing a shell of the battery according to an embodiment of the present application.
FIG. 16 is a cross-sectional view taken along C-C direction in FIG. 15.
FIG. 17 is an enlarged view of part D in FIG. 16.
FIG. 18 is a structural schematic diagram showing a sealing nail of the battery according to an embodiment of the present application.

### Description of reference numerals:

100: Shell cover;
101: First shell cover; 102: First insulating sheet; 103: Second shell cover;
1011: First through hole; 1012: Front connecting surface; 1013: Reverse connecting surface; 1014: Adhesive sinking platform; 1015: Annular connecting groove; 1031: Connecting terminal;
200: Shell;
201: Bottom surface; 202: Installation cavity; 203: Liquid-injection hole; 204: Sealing face;
300: Battery cell;
301: Third insulating sheet; 302: Fourth insulating sheet; 303: Second tab; 304: Second weld mark; 305: First tab; 306: First weld mark;
400: Protective glue layer;
401: First adhesive segment; 402: Second adhesive segment; 403: Third adhesive segment; 404: Connecting notch;
500: Second adapting member;
501: Second connecting section; 502: Second adaptor;
600: First adapting member;
601: First connecting section; 602: First adaptor; 603: Positioning member; 604: Bent end;
700: Second insulating sheet;
800: Sealing nail;
801: Abutment portion; 802: Sealing protrusion;
900: Top insulating sheet.

The specific embodiments of the present application have been illustrated according to above-described accompanying drawings, which will be described in more detail hereinafter. These accompanying drawings and textual description are not intended to limit the scope of the present application in any way, but rather to illustrate the concept of the present application to those skilled in the art with reference to the specific embodiment.

### DESCRIPTION OF EMBODIMENTS

A button battery is a small-sized battery. An outer peripheral surface of the button battery is covered with a layer of circumferential glue, to give good protection for the button battery. A battery compartment is a cavity for accommodating the button battery. In the related art, gluing is required to achieve the installation and fixation of the button battery after the button battery is installed in the battery compartment. However, since the entire outer peripheral surface of the button battery is covered with the circumferential glue, all the glue after gluing will stick to the circumferential glue, resulting in the body of the button battery not being fixed by the glue and the button battery being prone to shaking when in use, therefore the normal use of the button battery is affected and the safety of the button battery is low. Meanwhile, since the entire outer peripheral surface of the button battery is covered with the circumferential glue, other connecting wires of a device or connecting wires of the button battery are prone to interfering with the circumferential glue, affecting the installation of the button battery into the compartment.

In light of the above technical problems, an embodiment of the present application provides a battery, where an outer peripheral wall of the battery body is provided with a protective glue layer. The protective glue layer does not completely cover the battery body, so that part of the outer peripheral wall of the battery body is exposed outside. After gluing, the glue can stick to the part of the outer peripheral wall of the battery body, ensuring the installation and fixation of the battery after installed into the battery compartment, and avoiding the problem of battery shaking caused by the glue only fixing the protective glue layer but not fixing the battery body. Meanwhile, other connecting wires of the device or the connecting wires of the button battery will be routed and connected through the part of the outer peripheral wall exposed to the outside, effectively solving the problem of the interference between the other connecting wires of the device or the connecting wires of the battery and the protective glue layer.

The embodiments of the present application are applicable to button batteries, and are also applicable to other types of batteries. The battery provided in the embodiments of the present application will be described in detail below using the button battery as an example.

In order to make the purpose, technical solutions and advantages of embodiments of the present application clearer, the technical solutions in the embodiments of the present application will be clearly and comprehensively described below in combination with the accompanying drawings in the embodiments of the present application. Obviously, the described embodiments are only part of the embodiments, not all of the embodiments, of the present application. Based on the embodiments in the present application, all other embodiments obtained by those skilled in this field without any creative effort shall fall within the protection scope of the present application.

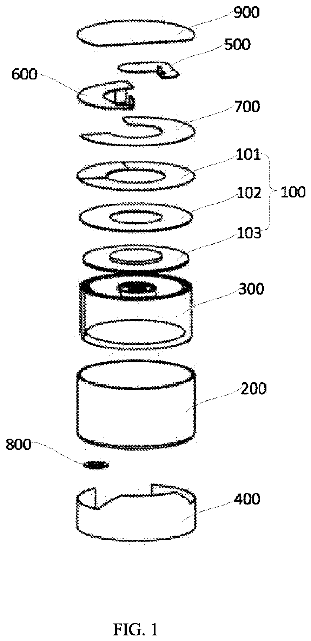

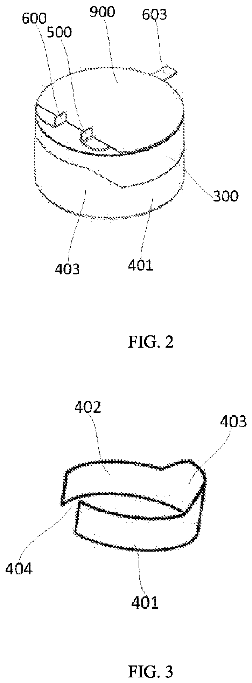

Please referring to FIGs. 1-3, FIG. 1 is a schematic diagram showing an exploded structure of the battery according to an embodiment of the present application. FIG. 2 is a structural schematic diagram showing an assembled battery according to an embodiment of the present application. FIG. 3 is a structural schematic diagram showing a protective glue layer of the battery according to an embodiment of the present application. The battery of the embodiment of the present application includes a battery body which includes a shell cover 100, a shell 200 and a battery cell 300. The shell 200 includes an installation cavity with an opening, the battery cell 300 is disposed in the installation cavity through the opening, the shell cover 100 matches the opening, and the shell cover 100 is used to seal the installation cavity so that the battery cell 300 is encapsulated in the shell 200.

The battery further includes a protective glue layer 400 which is coated on the outer peripheral wall of the battery body. The protective glue layer 400 includes a first adhesive segment 401 and a second adhesive segment 402 that are circumferentially coated on the outer peripheral wall of the battery body. One end of the first adhesive segment 401 is connected to one end of the second adhesive segment 402, and the other end of the first adhesive segment 401 and the other end of the second adhesive segment 402 are spaced apart in a circumferential direction of the outer peripheral wall, to form a connecting notch 404, and the part of the outer peripheral wall of the battery body is exposed outside the protective glue layer 400 through the connecting notch 404.

Meanwhile, in a first direction (a vertical direction shown in FIG. 1 and FIG. 2), both a width of the first adhesive segment 401 and a width of the second adhesive segment 402 are smaller than a thickness of the battery body (that is, a height in the vertical direction shown in FIG. 2) to form an exposed area, and part of the outer peripheral wall of the battery body is exposed outside the protective glue layer 400 through the exposed area.

In the battery of the embodiment of the present application, the outside of the battery body is coated with the protective glue layer 400; the protective glue layer 400 includes the first adhesive segment 401 and the second adhesive segment 402 that are circumferentially coated on the outer peripheral wall of the battery body, and the first adhesive segment 401 and the second adhesive segment 402 have the connecting notch 404 formed therebetween in the circumferential direction of the outer peripheral wall; in the first direction (the vertical direction shown in FIG. 1 and FIG. 2), both the width of the first adhesive segment 401 and the width of the second adhesive segment 402 are less than the thickness of the battery body, to form the exposed area; the part of the outer peripheral wall of the battery body is exposed outside the protective glue layer 400 through the connecting notch 404 and the exposed area; after gluing, the glue can be adhered to the part of the outer peripheral wall of the battery body through the exposed area, ensuring the installation and fixation of the battery after installed in the battery compartment, avoiding the problem of the battery shaking caused by the glue only fixing the protective glue layer but not fixing the battery body; meanwhile, the other connecting wires of the device or the connecting wires of the button battery will be routed and connected through the connecting notch 404, effectively solving the problem of the interference between the other connecting wires of the device or the connecting wires of the battery and the protective glue layer 400.

In the embodiment of the present application, the one end of the first adhesive segment 401 and the one end of the second adhesive segment 402 can be directly connected; or, the protective glue layer 400 can further include a third adhesive segment 403 that is also circumferentially coated on the outer peripheral wall of the battery body, and the third adhesive segment 403 is disposed between the first adhesive segment 401 and the second adhesive segment 402, and two ends of the third adhesive segment 403 are respectively connected to the first adhesive segment 401 and the second adhesive segment 402.

In the first direction (the vertical direction shown in FIG. 1 and FIG. 2), a width of the third adhesive segment 403 is smaller than the thickness of the battery body, also forming the exposed area. The width of the third adhesive segment 403 is larger than the width of the first adhesive segment 401 and the width of the second adhesive segment 402; that is, an area by which the outer peripheral wall of the battery body is coated with the third adhesive segment 403 is larger than an area by which the outer peripheral wall of the battery body is coated with the first adhesive segment 401, and is also larger than an area by which the outer peripheral wall of the battery body is coated with the second adhesive segment 402. While the protective glue layer 400 is ensured to still have a good protective effect, the glue is adhered to the part of the outer peripheral wall of the battery body through the exposed area after gluing.

Optionally, the first adhesive segment 401 and the second adhesive segment 402 are 2.5-3 mm beneath the outer peripheral wall of the battery body, and the third adhesive segment 403 is 1-2 mm beneath the outer peripheral wall of the battery body, to expose the battery body for easy glue adhesion.

Optionally, the other end of the first adhesive segment 401 and the other end of the second adhesive segment 402 are spaced apart by 6-8 mm in the circumferential direction of the outer peripheral wall, to form a 6-8 mm connecting notch 404 for leading the connection wire out of the connecting notch 404, while also increasing the adhesion area between the glue and the battery body.

Referring to FIG. 1 and FIGs. 4-6, FIGs. 4-6 are all structural schematic diagrams showing the battery cell of the battery according to embodiments of the present application. In the embodiments of the present application, the shell cover 100 may include a first shell cover 101 (which may be a negative electrode shell cover), a second shell cover 103 (which may be a positive electrode shell cover) and a first insulating sheet 102. The first shell cover 101, the first insulating sheet 102 and the second shell cover 103 are stacked along the first direction (the vertical direction shown in FIG. 1), and the first shell cover 101, the first insulating sheet 102 and the second shell cover 103 are adhered together by means of hot pressing. The first insulating sheet 102 is disposed between the first shell cover 101 and the second shell cover 103 to avoid mutual interference between the first shell cover 101 and the second shell cover 103.

The battery cell 300 has a front end surface and a back end surface in the first direction (the vertical direction shown in FIG. 1 and FIG. 2). The front end surface is adhered with a third insulating sheet 301, and the back end surface is adhered with a fourth insulating sheet 302, and both the third insulating sheet 301 and the fourth insulating sheet 302 have an avoidance hole. The battery cell 300 further includes a first tab 305 (which can be a negative tab) and a second tab 303 (which can be a positive tab); the first tab 305 extends outwards through the avoidance hole of the fourth insulating sheet 302 from the back end surface and is bent toward the fourth insulating sheet 302; the second tab 303 extends outwards through the avoidance hole of the third insulating sheet 301 from the front end surface and is bent toward the third insulating sheet 301. The third insulating sheet 301 and the fourth insulating sheet 302 are used to prevent the battery cell 300 from interfering with other components.

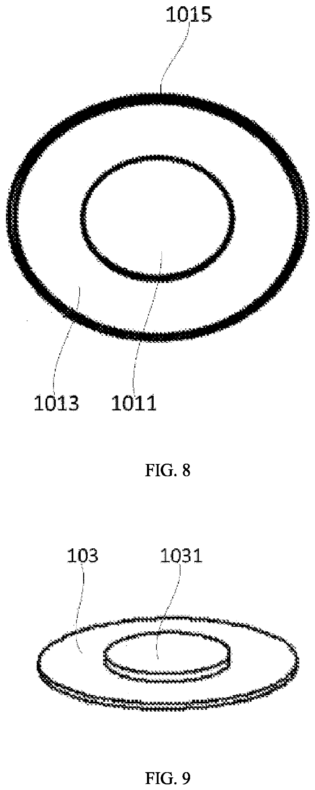

Referring to FIG. 1 and FIGs. 7-9, FIG. 7 and FIG. 8 are structural schematic diagrams of the first shell cover of the battery according to embodiments of the present application, and FIG. 9 is a structural schematic diagram of the second shell cover of the battery according to an embodiment of the present application. After the first shell cover 101, the first insulating sheet 102 and the second shell cover 103 are adhered together by means of hot pressing, the second shell cover 103 is disposed in the installation cavity; since the first shell cover 101 matches the opening, the first shell cover 101 is electrically connected to the shell 200 when the second shell cover 103 is disposed in the installation cavity through the opening. The first shell cover 101 includes a front connecting surface 1012 and a reverse connecting surface 1013 opposite to each other along the first direction (the vertical direction shown in FIG. 1), and the reverse connecting surface 1013 is connected to the first insulating sheet 102; and an edge of the reverse connecting surface 1013 is provided with an annular connecting groove 1015, the annular connecting groove 1015 matches the opening, and the annular connecting groove 1015 is welded to an end face where the opening is located, so that the first shell cover 101 is electrically connected to the shell 200.

In the above embodiment of the present application, the first shell cover 101 has a first through hole 1011, the first insulating sheet 102 has a second through hole, and the central axis of the first through hole 1011 coincides with the central axis of the second through hole. The second shell cover 103 has a connecting terminal 1031 (that is, a positive terminal) extending toward the first shell cover 101, the connecting terminal 1031 matches both the first through hole 1011 and the second through hole, the connecting terminal 1031 is connected to both the first through hole 1011 and the second through hole, and finally is exposed on the surface of the first shell cover 101 through the first through hole 1011 and the second through hole.

After the battery cell 300 is placed in the installation cavity of the shell 200, the first tab 305 (that is, the negative tab) of the battery cell 300 is welded to an inner wall surface of the shell 200, and the inner wall surface of the shell 200 can be the inner wall surface of the bottom of the shell 200, so that the first tab 305 is also electrically connected to the first shell cover 101. The second tab 303 (that is, the positive tab) is welded to the second shell cover 103, so that the second tab 303 is electrically connected to the connecting terminal 1031 (that is, the positive terminal).

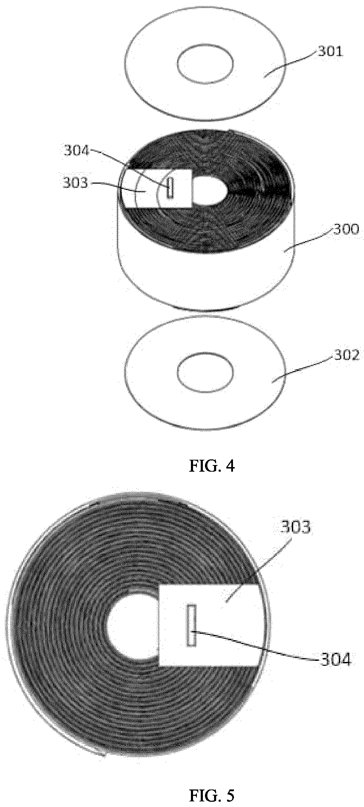

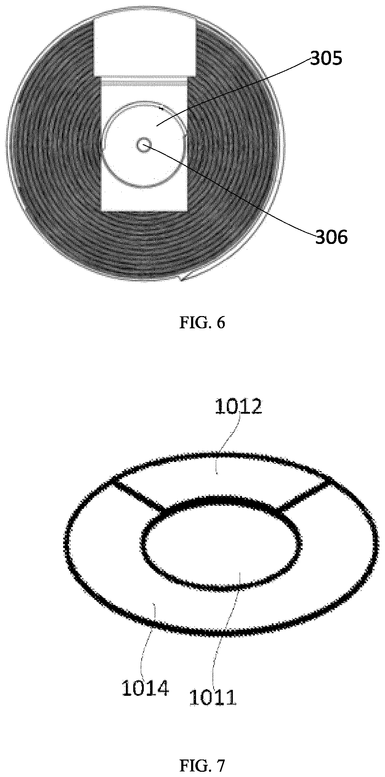

It should be noted that, with reference to FIG. 5 and FIG. 6 continually, a diameter of a first weld mark 306 on the first tab 305 is smaller than a width of the first tab 305; similarly, a width of a second weld mark 304 on the second tab 303 is smaller than a width of the second tab 303.

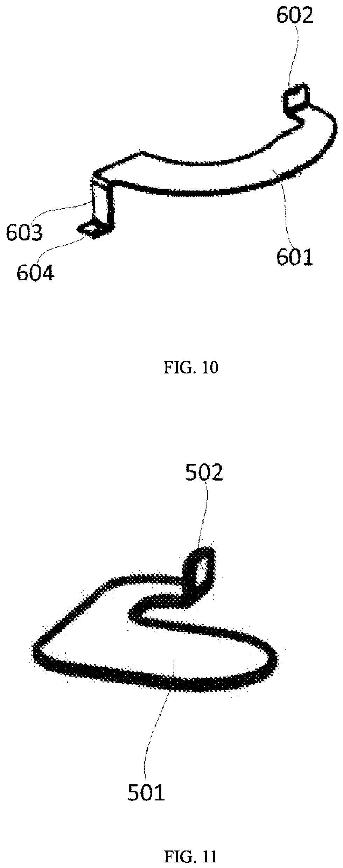

Referring to FIG. 1 and FIG. 7 continually, the battery body may further include a second insulating sheet 700, the front connecting surface 1012 is provided with an adhesive sinking platform 1014 matching the second insulating sheet 700, and the second insulating sheet 700 is connected to the adhesive sinking platform 1014. Referring to FIG. 10 and FIG. 11, FIG. 10 is a structural schematic diagram showing a first adapting member of the battery according to an embodiment of the present application, and FIG. 11 is a structural schematic diagram showing a second adapting member of the battery according to an embodiment of the present application. In the above embodiment of the present application, the battery body may further include a first adapting member 600 and a second adapting member 500. The first adapting member 600 includes a first connecting section 601 and a first adaptor 602 connected to each other, the first connecting section 601 is welded to the front connecting surface 1012 of the first shell cover 101, so that the first adaptor 602 is electrically connected to the first tab 305 (that is, the negative tab). Meanwhile, the first adaptor 602 is correspondingly placed on the second insulating sheet 700, and the second insulating sheet 700 is used to prevent the first adaptor 602 from interfering with other components.

The second adapting member 500 includes a second connecting section 501 and a second adaptor 502 connected to each other. The second connecting section 501 is welded to the connecting terminal 1031 (that is, the positive terminal) exposed on the surface of the first shell cover 101 through the first through hole 1011 and the second through hole, so that the second adaptor 502 is electrically connected to the second tab 303 (that is, the positive tab). Meanwhile, the second adaptor 502 is correspondingly placed on the second insulating sheet 700, and the second insulating sheet 700 is used to prevent the second adaptor 502 from interfering with other components.

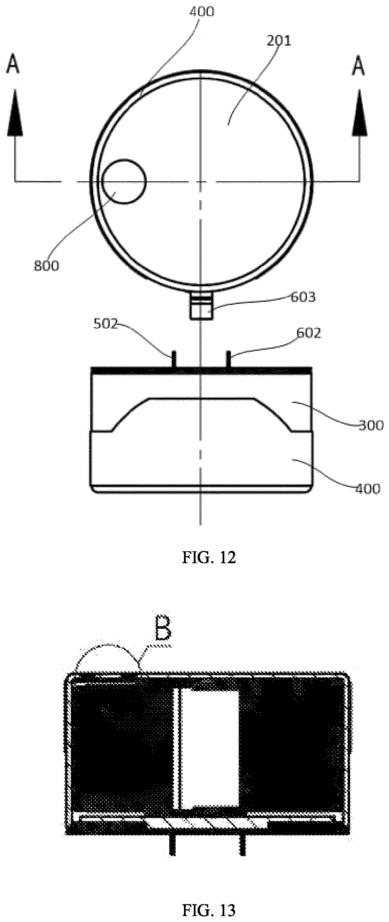

Referring to FIG. 2, FIG. 10 and FIG. 12 continually, FIG. 12 is a second structural schematic diagram of the battery according to an embodiment of the present application. In the above embodiment of the present application, the first adapting member 600 may further include a positioning member 603. The first connecting section 601 includes a first end and a second end, the first end is connected to the first adaptor 602, and the second end is connected to the positioning member 603. The positioning member 603 extends out of the battery body in a second direction (a horizontal direction shown in FIG. 2, where the second direction is perpendicular to the first direction), and the positioning member is disposed on a center line between the first adaptor 602 and the second adaptor 502. The positioning member 603 can play a positioning role during the installation of the battery into the battery compartment, ensuring that the first adaptor 602 and the second adaptor 502 are spaced apart within a reasonable distance. Meanwhile, it is ensured that the battery does not rotate after the installation of the battery into the battery compartment, to avoid deformation of the positive connecting terminal and the negative connecting terminal.

In the above embodiment of the present application, the third adhesive segment 403 is disposed between the first adhesive segment 401 and the second adhesive segment 402, and the first adaptor 602 and the second adaptor 502 are close to the third adhesive segment 403; and both the center of the third adhesive segment 403 and the center of the connecting notch 404 are located on the center line between the first adaptor 602 and the second adaptor 502; and the connecting notch 404 is symmetrically disposed with the first adaptor 602 and the second adaptor 502 along a center line of the battery body to ensure that the connecting notch 404 is located directly opposite the first adaptor 602 and the second adaptor 502; and other connecting wires of the device or the connecting wires of the button battery will be routed and connected through the connecting notch 404, to avoid interference with the first adaptor 602 and the second adaptor 502.

Referring to FIG. 2 continually, in the above embodiment of the present application, the positioning member 603 is parallel to the first connecting section 601, and the positioning member 603 is parallel to a plane where the second direction is located.

In the above embodiment of the present application, the positioning member 603 may also be perpendicular to the first connecting section 601, where, after the positioning member 603 extends out of the battery body in the second direction (the horizontal direction shown in FIG. 2), it will extend along the first direction, that is, the positioning member 603 will be bent toward the outer peripheral wall of the battery body. Meanwhile, there is a gap between the positioning member 603 and the outer peripheral wall of the battery body to prevent the negatively charged positioning member 603 from affecting the battery body.

Optionally, the gap may range from 0.2mm to 0.3 mm.

It should be noted that after the positioning member 603 is bent toward the outer peripheral wall of the battery body, the positioning member 603 may be located directly above the protective glue layer 400, or may be located in the exposed area uncovered with the protective glue layer 400.

It should further be noted that after the positioning member 603 is bent toward the outer peripheral wall of the battery body, a height of the positioning member 603 in the vertical direction is smaller than the height of the battery body, to avoid interference with other devices after the battery is installed into the battery compartment.

In the above embodiment of the present application, the positioning member 603 may further include a bent end 604, the bend end 604 is perpendicular to the outer peripheral wall of the battery body and extends away from the outer peripheral wall of the battery body; that is, after bent toward the outer peripheral wall of the battery body, the positioning member 603 will be continually bent along the second direction (the horizontal direction shown in FIG. 10) away from the outer peripheral wall of the battery body, to form the bent end 604, which is convenient for technicians to operate.

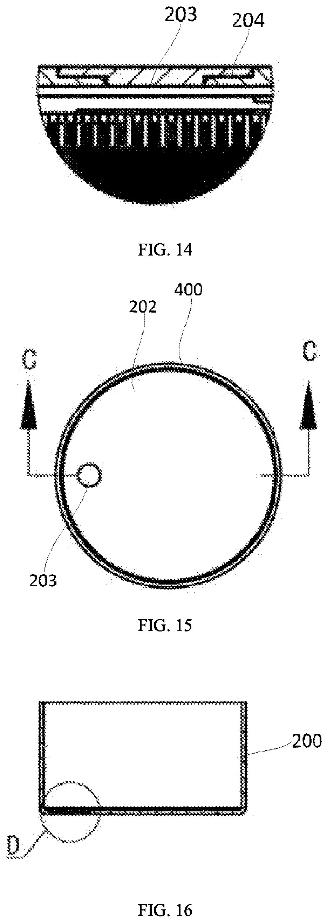

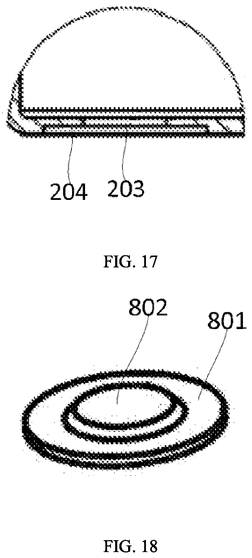

Referring to FIGs. 13-18, the shell 200 has an installation cavity 202, and a bottom surface 201 of the shell 200 is provided with a liquid-injection hole 203, and through which an electrolyte is injected into the installation cavity 202. An edge of the liquid-injection hole 203 is provided with a sealing face 204. The battery body further includes a sealing nail 800, the sealing nail 800 has an abutment portion 801 and a sealing protrusion 802, and the sealing protrusion 802 matches the liquid-injection hole 203; and the abutment portion 801 abuts against the sealing face 204 to achieve sealing of the installation cavity 202, while the sealing protrusion 802 is connected to the liquid-injection hole 203.

It should be noted that the abutment portion 801 and the sealing face 204 are welded together.

Referring to FIG. 1 and FIG. 2 continually, in the embodiment of the present application, the battery body further includes a top insulating sheet 900 disposed above the first adapting member 600 and the second adapting member 500, and the first adaptor 602 and the second adaptor 502 are exposed on the top of the battery body through an indentation of the top insulating sheet 900.

The electronic device further provided in this embodiment includes the battery described above and the battery compartment, where the battery is disposed in the battery compartment; and the part of the outer peripheral wall of the battery body is exposed outside the protective glue layer 400 through the exposed area; after gluing, the glue can be adhered to the part of the outer peripheral wall of the battery body through the exposed area, so that the adhesive glue layer is provided between the part of the outer peripheral wall and the inner wall of the battery compartment, thereby ensuring that the battery is installed and fixed after being installed in the battery compartment, and avoiding the problem of battery shaking caused by the glue only fixing the protective glue layer 400 but not fixing the battery body.

Meanwhile, the electronic device further includes wirings located in the connecting notch 404; and another part of the outer peripheral wall of the battery body is exposed outside the protective glue layer 400 through the connecting notch 404, and the another part of the outer peripheral wall is used for routing, so that the wirings (the other connecting wires or the connecting wires of the button battery) can be routed and connected through the connecting notch 404, effectively solving the problem of interference between the other connecting wires of the device or the connecting wires of the battery and the protective glue layer 400.

In the battery and the electronic device provided in the embodiments, the outside of the battery body is coated with the protective glue layer 400 of the battery, and the protective glue layer 400 includes the first adhesive segment 401 and the second adhesive segment 402 that are circumferentially coated on the outer peripheral wall of the battery body, and the first adhesive segment 401 and the second adhesive segment 402 have the connecting notch 404 formed therebetween in the circumferential direction of the outer peripheral wall; in the first direction (the vertical direction shown in FIG. 1 and FIG. 2), both the width of the first adhesive segment 401 and the width of the second adhesive segment 402 are less than the thickness of the battery body to form the exposed area, and the part of the outer peripheral wall of the battery body is exposed outside the protective glue layer 400 through the connecting notch 404 and the exposed area; after gluing, the glue can be adhered to the part of the outer peripheral wall of the battery body through the exposed area, ensuring the installation and fixation of the battery after installed in the battery compartment, avoiding the problem of battery shaking caused by the glue only fixing the protective glue layer but not fixing the battery body; meanwhile, the other connecting wires of the device or the connecting wires of the button battery will be routed and connected through the connecting notch 404, effectively solving the problem of the interference between the other connecting wires of the device or the connecting wires of the battery and the protective glue layer 400.

Finally, it should be noted that the above embodiments are only used to illustrate, rather than to limit, the technical solutions of the present application. Although the present application has been described in detail with reference to the aforementioned embodiments, those ordinarily skilled in the art should understand that: the technical solutions recited in the aforementioned embodiments can still be amended, or some or all of the technical features therein can be replaced equivalently. The scope of protection is solely defined by the appended claims.

## Claims

1. A battery, comprising: a battery body and a protective glue layer (400); wherein the protective glue layer (400) comprises a first adhesive segment (401) and a second adhesive segment (402) that are circumferentially coated on an outer peripheral wall of the battery body, and the first adhesive segment (401) and the second adhesive segment (402) have a connecting notch (404) formed therebetween in a circumferential direction of the outer peripheral wall;
both a width of the first adhesive segment (401) and a width of the second adhesive segment (402) are less than a thickness of the battery body in a first direction, to form an exposed area; and part of the outer peripheral wall of the battery body is exposed outside the protective glue layer (400) through the connecting notch (404) and the exposed area.

2. The battery according to claim 1, wherein the protective glue layer (400) further comprises a third adhesive segment (403), the third adhesive segment (403) is disposed between the first adhesive segment (401) and the second adhesive segment (402), and the third adhesive segment (403) is connected to both the first adhesive segment (401) and the second adhesive segment (402);
in the first direction, a width of the third adhesive segment (403) is smaller than the thickness of the battery body, and the width of the third adhesive segment (403) is greater than the width of the first adhesive segment (401) and the width of the second adhesive segment (402).

3. The battery according to claim 2, wherein the battery body comprises a shell (200), a battery cell (300), a first shell cover (101), a second shell cover (103) and a first insulating sheet (102); the shell comprises an installation cavity (202) with an opening, and the battery cell (300) is disposed in the installation cavity (202) through the opening;
the first shell cover (101), the first insulating sheet (102) and the second shell cover (103) are stacked along the first direction, the first insulating sheet (102) is disposed between the first shell cover (101) and the second shell cover (103), and the second shell cover (103) is disposed in the installation cavity (202) through the opening;
the first shell cover (101) has a first through hole (1011), the first insulating sheet (102) has a second through hole, a central axis of the first through hole (1011) coincides with a central axis of the second through hole, the second shell cover (103) has a connecting terminal (1031) extending toward the first shell cover (101), the connecting terminal (1031) matches both the first through hole (1011) and the second through hole, and the connecting terminal (1031) is exposed on a surface of the first shell cover (101) through the first through hole (1011) and the second through hole;
the battery cell (300) comprises a first tab (305) and a second tab (303), the first tab (305) is electrically connected to an inner wall surface of the shell (200), and the second tab (303) is electrically connected to the second shell cover (103).

4. The battery according to claim 3, wherein the first shell cover (101) comprises a front connecting surface (1012) and a reverse connecting surface (1013) opposite to each other along the first direction, the reverse connecting surface (1013) is connected to the first insulating sheet (102), and an edge of the reverse connecting surface (1013) is provided with an annular connecting groove (1015), and the annular connecting groove (1015) matches the opening.

5. The battery according to claim 4, wherein the battery body further comprises a first adapting member (600), a second adapting member (500) and a second insulating sheet (700);
the front connecting surface (1012) is provided with an adhesive sinking platform (1014) matching the second insulating sheet (700);
a first connecting section (601) of the first adapting member (600) is electrically connected to the front connecting surface (1012) of the first shell cover (101), and a first adaptor (602) of the first adapting member (600) is correspondingly placed on the second insulating sheet (700);
a second connecting section (501) of the second adapting member (500) is electrically connected to the connecting terminal (1031), and a second adaptor (502) of the second adapting member (500) is correspondingly placed on the second insulating sheet (700).

6. The battery according to claim 5, wherein the first adapting member (600) further comprises a positioning member (603), the first connecting section (601) comprises a first end and a second end, the first adaptor (602) is connected to the first end, the positioning member (603) is connected to the second end, the positioning member (603) extends out of the battery body in a second direction, and the positioning member (603) is disposed on a center line between the first adaptor (602) and the second adaptor (502);
wherein the second direction is perpendicular to the first direction.

7. The battery according to claim 6, wherein the positioning member (603) is parallel to the first connecting section (601).

8. The battery according to claim 6, wherein the positioning member (603) is perpendicular to the first connecting section (601), the positioning member (603) extends along the first direction, and a gap is present between the positioning member (603) and the outer peripheral wall of the battery body;
wherein the positioning member (603) comprises a bent end (604), and the bent end (604) is perpendicular to the outer peripheral wall of the battery body and extends away from the outer peripheral wall of the battery body.

9. The battery according to claim 5, wherein a center line of the third adhesive segment (403) is aligned with a center line of a gap between the first adapting member (600) and the second adapting member (500);
wherein the connecting notch (404) is symmetrically provided with the first adapting member (600) and the second adapting member (500) along a center line of the battery body.

10. The battery according to claim 2, wherein in the first direction, the width of the first adhesive segment (401) and the width of the second adhesive segment (402) are smaller than a width of the outer peripheral wall of the battery body by 2.5 to 3 mm, and the width of the third adhesive segment (403) is smaller than the width of the outer peripheral wall of the battery body by 1 to 2 mm;
wherein one end of the first adhesive segment (401) and one end of the second adhesive segment (402) are connected to the third adhesive segment (403), and the other end of the first adhesive segment (401) and the other end of the second adhesive segment (402) are spaced apart to form, in the circumferential direction of the outer peripheral wall of the battery body, the connecting notch (404) of 6 to 8 mm.

11. The battery according to claim 3, wherein the first tab (305) is welded to the inner wall surface of the shell (200), and a projection area of a first weld mark (306) on the first tab (305) in the first direction is smaller than a projection area of the first tab (305) in the first direction;
the second tab (303) is welded to the second shell cover (103), and a projection area of a second weld mark (304) on the second tab (303) in the first direction is smaller than a projection area of the second tab (303) in the first direction.

12. The battery according to claim 3, wherein the shell (200) is provided with a liquid-injection hole (203), and an edge of the liquid-injection hole (203) is provided with a sealing face (204);
the battery body further comprises a sealing nail (800), the sealing nail (800) has an abutment portion (801) and a sealing protrusion (802), and the sealing protrusion (802) matches the liquid-injection hole (203); and the abutment portion (801) abuts against the sealing face (204) while the sealing protrusion (802) is connected to the liquid-injection hole (203);
wherein the abutment portion (801) is welded to the sealing face (204).

13. The battery according to claim 5, wherein the battery cell (300) has a front end surface and a back end surface in the first direction, the front end surface is adhered with a third insulating sheet (301), and the back end surface is adhered with a fourth insulating sheet (302);
both the third insulating sheet (301) and the fourth insulating sheet (302) have an avoidance hole, and the first tab (305) extends outwards through the avoidance hole of the fourth insulating sheet (302) from the back end surface and is bent toward the fourth insulating sheet (302); the second tab (303) extends outwards through the avoidance hole of the third insulating sheet (301) from the front end surface and is bent toward the third insulating sheet (301);
wherein the battery body further comprises a top insulating sheet (900) disposed above the first adapting member (600) and the second adapting member (500), and the first adaptor (602) and the second adaptor (502) are exposed on a top of the battery body through an indentation of the top insulating sheet (900).

14. The battery according to claim 8, wherein the gap between the positioning member (603) and the outer peripheral wall of the battery body ranges from 0.2mm to 0.3 mm.

15. An electronic device, comprising the battery according to any one of claims 1 to 14 and a battery compartment; the battery is disposed inside the battery compartment, part of an outer peripheral wall of a battery body is exposed outside a protective glue layer (400) through an exposed area, and an adhesive glue layer is disposed between the part of the outer peripheral wall and an inner wall of the battery compartment;
another part of the outer peripheral wall of the battery body is exposed outside the protective glue layer (400) through a connecting notch (404), and the electronic device further comprises wirings located in the connecting notch (404).

## Patentansprüche

1. Batterie, umfassend: einen Batteriekörper und eine Schutzklebstoffschicht (400); wobei die Schutzklebstoffschicht (400) einen ersten Klebstoffabschnitt (401) und einen zweiten Klebstoffabschnitt (402) umfasst, die in Umfangsrichtung auf einer äußeren Umfangswand des Batteriekörpers aufgebracht sind, und zwischen dem ersten Klebstoffabschnitt (401) und dem zweiten Klebstoffabschnitt (402) in einer Umfangsrichtung der äußeren Umfangswand eine Verbindungsaussparung (404) ausgebildet ist;
wobei sowohl eine Breite des ersten Klebstoffabschnitts (401) als auch eine Breite des zweiten Klebstoffabschnitts (402) kleiner als eine Dicke des Batteriekörpers in einer ersten Richtung sind, um einen freiliegenden Bereich zu bilden; und ein Teil der äußeren Umfangswand des Batteriekörpers durch die Verbindungsaussparung (404) und den freiliegenden Bereich außerhalb der Schutzklebstoffschicht (400) freiliegt.

2. Batterie nach Anspruch 1, wobei die Schutzklebstoffschicht (400) ferner einen dritten Klebstoffabschnitt (403) umfasst, der dritte Klebstoffabschnitt (403) zwischen dem ersten Klebstoffabschnitt (401) und dem zweiten Klebstoffabschnitt (402) angeordnet ist und der dritte Klebstoffabschnitt (403) sowohl mit dem ersten Klebstoffabschnitt (401) als auch mit dem zweiten Klebstoffabschnitt (402) verbunden ist;
in der ersten Richtung eine Breite des dritten Klebstoffabschnitts (403) kleiner als die Dicke des Batteriekörpers ist und die Breite des dritten Klebstoffabschnitts (403) größer als die Breite des ersten Klebstoffabschnitts (401) und die Breite des zweiten Klebstoffabschnitts (402) ist.

3. Batterie nach Anspruch 2, wobei der Batteriekörper ein Gehäuse (200), eine Batteriezelle (300), einen ersten Gehäusedeckel (101), einen zweiten Gehäusedeckel (103) und eine erste Isolierfolie (102) umfasst; das Gehäuse einen Einbauhohlraum (202) mit einer Öffnung umfasst und die Batteriezelle (300) durch die Öffnung in dem Einbauhohlraum (202) angeordnet ist;
der erste Gehäusedeckel (101), die erste Isolierfolie (102) und der zweite Gehäusedeckel (103) entlang der ersten Richtung übereinandergestapelt sind, die erste Isolierfolie (102) zwischen dem ersten Gehäusedeckel (101) und dem zweiten Gehäusedeckel (103) angeordnet ist und der zweite Gehäusedeckel (103) durch die Öffnung in dem Einbauhohlraum (202) angeordnet ist;
der erste Gehäusedeckel (101) ein erstes Durchgangsloch (1011) aufweist, die erste Isolierfolie (102) ein zweites Durchgangsloch aufweist, eine Mittelachse des ersten Durchgangslochs (1011) mit einer Mittelachse des zweiten Durchgangslochs zusammenfällt, der zweite Gehäusedeckel (103) einen Anschlusskontakt (1031) aufweist, der sich in Richtung des ersten Gehäusedeckels (101) erstreckt, der Anschlusskontakt (1031) sowohl an das erste Durchgangsloch (1011) als auch an das zweite Durchgangsloch angepasst ist und der Anschlusskontakt (1031) durch das erste Durchgangsloch (1011) und das zweite Durchgangsloch an einer Oberfläche des ersten Gehäusedeckels (101) freiliegt;
die Batteriezelle (300) eine erste Polfahne (305) und eine zweite Polfahne (303) umfasst, die erste Polfahne (305) elektrisch mit einer Innenwandfläche des Gehäuses (200) verbunden ist und die zweite Polfahne (303) elektrisch mit dem zweiten Gehäusedeckel (103) verbunden ist.

4. Batterie nach Anspruch 3, wobei der erste Gehäusedeckel (101) eine vordere Verbindungsfläche (1012) und eine rückseitige Verbindungsfläche (1013) umfasst, die einander entlang der ersten Richtung gegenüberliegen, die rückseitige Verbindungsfläche (1013) mit der ersten Isolierfolie (102) verbunden ist und an einem Rand der rückseitigen Verbindungsfläche (1013) eine ringförmige Verbindungsnut (1015) vorgesehen ist, und die ringförmige Verbindungsnut (1015) an die Öffnung angepasst ist.

5. Batterie nach Anspruch 4, wobei der Batteriekörper ferner ein erstes Adapterelement (600), ein zweites Adapterelement (500) und eine zweite Isolierfolie (700) umfasst;
an der vorderen Verbindungsfläche (1012) eine an die zweite Isolierfolie (700) angepasste abgesenkte Klebeplattform (1014) vorgesehen ist;
ein erster Verbindungsabschnitt (601) des ersten Adapterelements (600) elektrisch mit der vorderen Verbindungsfläche (1012) des ersten Gehäusedeckels (101) verbunden ist und ein erster Adapter (602) des ersten Adapterelements (600) entsprechend auf der zweiten Isolierfolie (700) angeordnet ist;
ein zweiter Verbindungsabschnitt (501) des zweiten Adapterelements (500) elektrisch mit dem Anschlusskontakt (1031) verbunden ist und ein zweiter Adapter (502) des zweiten Adapterelements (500) entsprechend auf der zweiten Isolierfolie (700) angeordnet ist.

6. Batterie nach Anspruch 5, wobei das erste Adapterelement (600) ferner ein Positionierungselement (603) umfasst, der erste Verbindungsabschnitt (601) ein erstes Ende und ein zweites Ende umfasst, der erste Adapter (602) mit dem ersten Ende verbunden ist, das Positionierungselement (603) mit dem zweiten Ende verbunden ist, das Positionierungselement (603) in einer zweiten Richtung aus dem Batteriekörper herausragt und das Positionierungselement (603) auf einer Mittellinie zwischen dem ersten Adapter (602) und dem zweiten Adapter (502) angeordnet ist;
wobei die zweite Richtung senkrecht zu der ersten Richtung verläuft.

7. Batterie nach Anspruch 6, wobei das Positionierungselement (603) parallel zu dem ersten Verbindungsabschnitt (601) verläuft.

8. Batterie nach Anspruch 6, wobei das Positionierungselement (603) senkrecht zu dem ersten Verbindungsabschnitt (601) verläuft, das Positionierungselement (603) sich entlang der ersten Richtung erstreckt und zwischen dem Positionierungselement (603) und der äußeren Umfangswand des Batteriekörpers ein Spalt vorhanden ist;
wobei das Positionierungselement (603) ein abgebogenes Ende (604) umfasst und das abgebogene Ende (604) senkrecht zu der äußeren Umfangswand des Batteriekörpers verläuft und sich von der äußeren Umfangswand des Batteriekörpers weg erstreckt.

9. Batterie nach Anspruch 5, wobei eine Mittellinie des dritten Klebstoffabschnitts (403) mit einer Mittellinie eines Spalts zwischen dem ersten Adapterelement (600) und dem zweiten Adapterelement (500) fluchtet;
wobei die Verbindungsaussparung (404) mit dem ersten Adapterelement (600) und dem zweiten Adapterelement (500) entlang einer Mittellinie des Batteriekörpers symmetrisch vorgesehen ist.

10. Batterie nach Anspruch 2, wobei in der ersten Richtung die Breite des ersten Klebstoffabschnitts (401) und die Breite des zweiten Klebstoffabschnitts (402) um 2,5 bis 3 mm kleiner als eine Breite der äußeren Umfangswand des Batteriekörpers sind und die Breite des dritten Klebstoffabschnitts (403) um 1 bis 2 mm kleiner als die Breite der äußeren Umfangswand des Batteriekörpers ist;
wobei ein Ende des ersten Klebstoffabschnitts (401) und ein Ende des zweiten Klebstoffabschnitts (402) mit dem dritten Klebstoffabschnitt (403) verbunden sind und das andere Ende des ersten Klebstoffabschnitts (401) und das andere Ende des zweiten Klebstoffabschnitts (402) voneinander beabstandet sind, um in der Umfangsrichtung der äußeren Umfangswand des Batteriekörpers die Verbindungsaussparung (404) von 6 bis 8 mm zu bilden.

11. Batterie nach Anspruch 3, wobei die erste Polfahne (305) an die Innenwandfläche des Gehäuses (200) geschweißt ist und eine Projektionsfläche einer ersten Schweißspur (306) auf der ersten Polfahne (305) in der ersten Richtung kleiner als eine Projektionsfläche der ersten Polfahne (305) in der ersten Richtung ist;
die zweite Polfahne (303) an den zweiten Gehäusedeckel (103) geschweißt ist und eine Projektionsfläche einer zweiten Schweißspur (304) auf der zweiten Polfahne (303) in der ersten Richtung kleiner als eine Projektionsfläche der zweiten Polfahne (303) in der ersten Richtung ist.

12. Batterie nach Anspruch 3, wobei das Gehäuse (200) mit einer Flüssigkeitseinspritzöffnung (203) versehen ist und an einem Rand der Flüssigkeitseinspritzöffnung (203) eine Dichtfläche (204) vorgesehen ist;
der Batteriekörper ferner einen Dichtnagel (800) umfasst, der Dichtnagel (800) einen Anlageabschnitt (801) und einen Dichtvorsprung (802) aufweist und der Dichtvorsprung (802) an die Flüssigkeitseinspritzöffnung (203) angepasst ist; und der Anlageabschnitt (801) an der Dichtfläche (204) anliegt, während der Dichtvorsprung (802) mit der Flüssigkeitseinspritzöffnung (203) verbunden ist;
wobei der Anlageabschnitt (801) an die Dichtfläche (204) geschweißt ist.

13. Batterie nach Anspruch 5, wobei die Batteriezelle (300) in der ersten Richtung eine Vorderendfläche und eine Rückendfläche aufweist, auf der Vorderendfläche eine dritte Isolierfolie (301) aufgeklebt ist und auf der Rückendfläche eine vierte Isolierfolie (302) aufgeklebt ist;
sowohl die dritte Isolierfolie (301) als auch die vierte Isolierfolie (302) jeweils eine Freistellungsöffnung aufweisen und die erste Polfahne (305) sich von der Rückendfläche durch die Freistellungsöffnung der vierten Isolierfolie (302) nach außen erstreckt und in Richtung der vierten Isolierfolie (302) gebogen ist; wobei die zweite Polfahne (303) sich von der Vorderendfläche durch die Freistellungsöffnung der dritten Isolierfolie (301) nach außen erstreckt und zu der dritten Isolierfolie (301) hin gebogen ist;
wobei der Batteriekörper ferner eine obere Isolierfolie (900) umfasst, die oberhalb des ersten Adapterelements (600) und des zweiten Adapterelements (500) angeordnet ist, und der erste Adapter (602) und der zweite Adapter (502) durch eine Ausnehmung der oberen Isolierfolie (900) an einer Oberseite des Batteriekörpers freiliegen.

14. Batterie nach Anspruch 8, wobei der Spalt zwischen dem Positionierungselement (603) und der äußeren Umfangswand des Batteriekörpers im Bereich von 0,2 mm bis 0,3 mm liegt.

15. Elektronische Vorrichtung, umfassend die Batterie nach einem der Ansprüche 1 bis 14 und ein Batteriefach; wobei die Batterie innerhalb des Batteriefachs angeordnet ist, ein Teil einer äußeren Umfangswand eines Batteriekörpers durch einen freiliegenden Bereich außerhalb einer Schutzklebstoffschicht (400) freiliegt und zwischen dem Teil der äußeren Umfangswand und einer Innenwand des Batteriefachs eine Haftklebstoffschicht angeordnet ist;
ein weiterer Teil der äußeren Umfangswand des Batteriekörpers durch eine Verbindungsaussparung (404) außerhalb der Schutzklebstoffschicht (400) freiliegt und die elektronische Vorrichtung ferner Verdrahtungen umfasst, die sich in der Verbindungsaussparung (404) befinden.

## Revendications

1. Batterie, comprenant : un corps de batterie et une couche de colle de protection (400) ; dans laquelle la couche de colle de protection (400) comprend un premier segment adhésif (401) et un deuxième segment adhésif (402) qui sont appliqués circonférentiellement sur une paroi périphérique extérieure du corps de batterie, et une encoche de raccordement (404) est formée entre le premier segment adhésif (401) et le deuxième segment adhésif (402) dans une direction circonférentielle de la paroi périphérique extérieure ;
une largeur du premier segment adhésif (401) et une largeur du deuxième segment adhésif (402) sont toutes deux inférieures à une épaisseur du corps de batterie dans une première direction, de manière à former une zone exposée ; et une partie de la paroi périphérique extérieure du corps de batterie est exposée à l'extérieur de la couche de colle de protection (400) à travers l'encoche de raccordement (404) et la zone exposée.

2. Batterie selon la revendication 1, dans laquelle la couche de colle de protection (400) comprend en outre un troisième segment adhésif (403), le troisième segment adhésif (403) est disposé entre le premier segment adhésif (401) et le deuxième segment adhésif (402), et le troisième segment adhésif (403) est raccordé à la fois au premier segment adhésif (401) et au deuxième segment adhésif (402) ;
dans la première direction, une largeur du troisième segment adhésif (403) est inférieure à l'épaisseur du corps de batterie, et la largeur du troisième segment adhésif (403) est supérieure à la largeur du premier segment adhésif (401) et à la largeur du deuxième segment adhésif (402).

3. Batterie selon la revendication 2, dans laquelle le corps de batterie comprend un boîtier (200), une cellule de batterie (300), un premier couvercle de boîtier (101), un deuxième couvercle de boîtier (103) et une première feuille isolante (102) ; le boîtier comprend une cavité d'installation (202) pourvue d'une ouverture, et la cellule de batterie (300) est disposée dans la cavité d'installation (202) à travers l'ouverture ;
le premier couvercle de boîtier (101), la première feuille isolante (102) et le deuxième couvercle de boîtier (103) sont empilés suivant la première direction, la première feuille isolante (102) est disposée entre le premier couvercle de boîtier (101) et le deuxième couvercle de boîtier (103), et le deuxième couvercle de boîtier (103) est disposé dans la cavité d'installation (202) à travers l'ouverture ;
le premier couvercle de boîtier (101) présente un premier trou traversant (1011), la première feuille isolante (102) présente un deuxième trou traversant, un axe central du premier trou traversant (1011) coïncide avec un axe central du deuxième trou traversant, le deuxième couvercle de boîtier (103) présente une borne de raccordement (1031) s'étendant en direction du premier couvercle de boîtier (101), la borne de raccordement (1031) correspond à la fois au premier trou traversant (1011) et au deuxième trou traversant, et la borne de raccordement (1031) est exposée sur une surface du premier couvercle de boîtier (101) à travers le premier trou traversant (1011) et le deuxième trou traversant ;
la cellule de batterie (300) comprend une première languette (305) et une deuxième languette (303), la première languette (305) est raccordée électriquement à une surface de paroi intérieure du boîtier (200), et la deuxième languette (303) est raccordée électriquement au deuxième couvercle de boîtier (103).

4. Batterie selon la revendication 3, dans laquelle le premier couvercle de boîtier (101) comprend une surface de raccordement avant (1012) et une surface de raccordement arrière (1013) opposées l'une à l'autre suivant la première direction, la surface de raccordement arrière (1013) est raccordée à la première feuille isolante (102), et un bord de la surface de raccordement arrière (1013) est pourvu d'une rainure annulaire de raccordement (1015), la rainure annulaire de raccordement (1015) correspondant à l'ouverture.

5. Batterie selon la revendication 4, dans laquelle le corps de batterie comprend en outre un premier élément adaptateur (600), un deuxième élément adaptateur (500) et une deuxième feuille isolante (700) ; la surface de raccordement avant (1012) est pourvue d'une plate-forme d'encollage en retrait (1014) correspondant à la deuxième feuille isolante (700) ;
une première section de raccordement (601) du premier élément adaptateur (600) est raccordée électriquement à la surface de raccordement avant (1012) du premier couvercle de boîtier (101), et un premier adaptateur (602) du premier élément adaptateur (600) est placé de manière correspondante sur la deuxième feuille isolante (700) ;
une deuxième section de raccordement (501) du deuxième élément adaptateur (500) est raccordée électriquement à la borne de raccordement (1031), et un deuxième adaptateur (502) du deuxième élément adaptateur (500) est placé de manière correspondante sur la deuxième feuille isolante (700).

6. Batterie selon la revendication 5, dans laquelle le premier élément adaptateur (600) comprend en outre un élément de positionnement (603), la première section de raccordement (601) comprend une première extrémité et une deuxième extrémité, le premier adaptateur (602) est raccordé à la première extrémité, l'élément de positionnement (603) est raccordé à la deuxième extrémité, l'élément de positionnement (603) s'étend hors du corps de batterie dans une deuxième direction, et l'élément de positionnement (603) est disposé sur une ligne médiane entre le premier adaptateur (602) et le deuxième adaptateur (502) ;
dans laquelle la deuxième direction est perpendiculaire à la première direction.

7. Batterie selon la revendication 6, dans laquelle l'élément de positionnement (603) est parallèle à la première section de raccordement (601).

8. Batterie selon la revendication 6, dans laquelle l'élément de positionnement (603) est perpendiculaire à la première section de raccordement (601), l'élément de positionnement (603) s'étend suivant la première direction, et un espace est présent entre l'élément de positionnement (603) et la paroi périphérique extérieure du corps de batterie ;
dans laquelle l'élément de positionnement (603) comprend une extrémité coudée (604), et l'extrémité coudée (604) est perpendiculaire à la paroi périphérique extérieure du corps de batterie et s'étend en s'éloignant de la paroi périphérique extérieure du corps de batterie.

9. Batterie selon la revendication 5, dans laquelle une ligne médiane du troisième segment adhésif (403) est alignée avec une ligne médiane d'un espace entre le premier élément adaptateur (600) et le deuxième élément adaptateur (500) ;
dans laquelle l'encoche de raccordement (404) est prévue symétriquement avec le premier élément adaptateur (600) et le deuxième élément adaptateur (500) suivant une ligne médiane du corps de batterie.

10. Batterie selon la revendication 2, dans laquelle, dans la première direction, la largeur du premier segment adhésif (401) et la largeur du deuxième segment adhésif (402) sont inférieures de 2,5 à 3 mm à une largeur de la paroi périphérique extérieure du corps de batterie, et la largeur du troisième segment adhésif (403) est inférieure de 1 à 2 mm à la largeur de la paroi périphérique extérieure du corps de batterie ;
dans laquelle une extrémité du premier segment adhésif (401) et une extrémité du deuxième segment adhésif (402) sont raccordées au troisième segment adhésif (403), et l'autre extrémité du premier segment adhésif (401) et l'autre extrémité du deuxième segment adhésif (402) sont espacées l'une de l'autre de manière à former, dans la direction circonférentielle de la paroi périphérique extérieure du corps de batterie, l'encoche de raccordement (404) de 6 à 8 mm.

11. Batterie selon la revendication 3, dans laquelle la première languette (305) est soudée à la surface de paroi intérieure du boîtier (200), et une aire de projection d'une première marque de soudure (306) sur la première languette (305) suivant la première direction est inférieure à une aire de projection de la première languette (305) suivant la première direction ;
la deuxième languette (303) est soudée au deuxième couvercle de boîtier (103), et une aire de projection d'une deuxième marque de soudure (304) sur la deuxième languette (303) suivant la première direction est inférieure à une aire de projection de la deuxième languette (303) suivant la première direction.

12. Batterie selon la revendication 3, dans laquelle le boîtier (200) est pourvu d'un orifice d'injection de liquide (203), et un bord de l'orifice d'injection de liquide (203) est pourvu d'une face d'étanchéité (204) ;
le corps de batterie comprend en outre un clou d'étanchéité (800), le clou d'étanchéité (800) présente une partie d'appui (801) et une saillie d'étanchéité (802), et la saillie d'étanchéité (802) correspond à l'orifice d'injection de liquide (203) ; et la partie d'appui (801) vient en butée contre la face d'étanchéité (204) tandis que la saillie d'étanchéité (802) est raccordée à l'orifice d'injection de liquide (203) ;
dans laquelle la partie d'appui (801) est soudée à la face d'étanchéité (204).

13. Batterie selon la revendication 5, dans laquelle la cellule de batterie (300) présente une surface d'extrémité avant et une surface d'extrémité arrière dans la première direction, une troisième feuille isolante (301) est collée sur la surface d'extrémité avant, et une quatrième feuille isolante (302) est collée sur la surface d'extrémité arrière ;
la troisième feuille isolante (301) et la quatrième feuille isolante (302) présentent chacune un trou de dégagement, et la première languette (305) s'étend vers l'extérieur depuis la surface d'extrémité arrière à travers le trou de dégagement de la quatrième feuille isolante (302) et est pliée en direction de la quatrième feuille isolante (302) ; la deuxième languette (303) s'étend vers l'extérieur depuis la surface d'extrémité avant à travers le trou de dégagement de la troisième feuille isolante (301) et est pliée en direction de la troisième feuille isolante (301) ;
dans laquelle le corps de batterie comprend en outre une feuille isolante supérieure (900) disposée au-dessus du premier élément adaptateur (600) et du deuxième élément adaptateur (500), et le premier adaptateur (602) et le deuxième adaptateur (502) sont exposés sur le dessus du corps de batterie à travers un évidement de la feuille isolante supérieure (900).

14. Batterie selon la revendication 8, dans laquelle l'espace entre l'élément de positionnement (603) et la paroi périphérique extérieure du corps de batterie est compris entre 0,2 mm et 0,3 mm.

15. Dispositif électronique, comprenant la batterie selon l'une quelconque des revendications 1 à 14 et un compartiment de batterie ; la batterie est disposée à l'intérieur du compartiment de batterie, une partie d'une paroi périphérique extérieure d'un corps de batterie est exposée à l'extérieur d'une couche de colle de protection (400) à travers une zone exposée, et une couche de colle adhésive est disposée entre ladite partie de la paroi périphérique extérieure et une paroi intérieure du compartiment de batterie ;
une autre partie de la paroi périphérique extérieure du corps de batterie est exposée à l'extérieur de la couche de colle de protection (400) à travers une encoche de raccordement (404), et le dispositif électronique comprend en outre des câblages situés dans l'encoche de raccordement (404).
